# EUROPEAN PATENT SPECIFICATION

(11) **EP 3 247 685 B1**
(45) Date of publication and mention of the grant of the patent: **19.08.2020**
(21) Application number: 15710013.2
(22) Date of filing: 19.01.2015
(51) Int. Cl.: C04B 28/02, C04B 28/06, C04B 28/18, C04B 7/345

(54) **METHODS FOR THEIR MANUFACTURING DENDRITIC BELITE BASED HYDRAULIC BINDERS**
VERFAHREN ZUR HERSTELLUNG VON AUF DENDRITISCHEM BELIT BASIERENDEN HYDRAULISCHEN BINDEMITTELN
PROCÉDÉS DE FABRICATION DES LIANTS HYDRAULIQUES À BASE DE BÉLITE DENDRITIQUE

(43) Date of publication of application: 29.11.2017
(73) Proprietor: Cimpor Portugal, SGPS, SA, 1250-009 Lisboa (PT); Instituto Superior Técnico, 1049-001 Lisboa (PT)
(72) Inventor: HORTA, Ricardo Simões Bayão, P-1050-145 (PT); COLAÇO, Rogério Anacleto Cordeiro, P-1700-369 Lisboa (PT); LOPES, José Nuno Aguiar Canongia, P-1700-116 (PT); SANTOS, Rodrigo Lino dos, P-2620-219 Ramada (PT); PEREIRA, João Chaves, P-1600-675 (PT); SILVA, Paulo José Pires da Rocha E, P-1600-675 Lisboa (PT); LEBREIRO, Sandra Maria Martín, P-1990-166 Lisboa (PT)
(74) Representative: Alves Moreira, Pedro
(86) International application number: PCT/PT2015/000005
(87) International publication number: WO 2016/118029

(56) References cited:
- US-A- 5 509 962
- K MASAKI ET AL: "Effect of prolonged heating at elevated temperatures on the phase composition and textures of portland cement clinker", CEMENT AND CONCRETE RESEARCH, vol. 32, no. 6, 1 June 2002 (2002-06-01), pages 931-934, XP055111492, ISSN: 0008-8846, DOI: 10.1016/S0008-8846(02)00726-3

## Description

The present invention relates to a new hydraulic binder comprising the combination of hydraulic active and latent hydraulic active calcium silicate phases, wherein the hydraulic active phase is formed by belite crystals of specific dendritic morphology and the latent hydraulic phase is an endogenous amorphous calcium silicate matrix resulting from the formation of said belite dendrites. The hydraulic binder is produced by clinkerization operations using the traditional clinker route, but producing less CO₂ emissions.

Concrete is one of the most worldwide used manufactured materials. Cement, in particular ordinary Portland Cement (OPC) is the component of concrete responsible for its strength when reacting with water. The present world production of OPC is around 4 billion metric tons per year.

Herein, the following abbreviations, which are conventional in the art, are used, unless otherwise stated:
C represents CaO (calcium oxide);
H represents H₂O (water);
S represents SiO₂ (silica);
A represents Al₂O₃ (alumina);
F represents Fe₂O₃ (iron(III) oxide);
CSH represents an amorphous calcium silicate hydrate, which results from the hydraulic reaction;
amorphous means a non-crystalline solid phase;
C₃S represents tricalcium silicate (3 CaO·SiO₂), known as alite; C₂S represents dicalcium silicate (2 CaO·SiO₂), wherein belite is any of the allotropic forms of C₂S;
CH represents calcium hydroxide Ca(OH)₂, known as portlandite; and
BAT means best available technology.

Further, herein the expression "hydraulic binder" means a compound or composition which sets and hardens in the presence of water by hydration, resulting in a solid material. The hydraulic binder is in particular cement, and the solid material is in particular concrete. The expression "latent hydraulic" means the property of a compound or composition to become hydraulic active when mixed with a hydraulic active phase. This means that the compound or composition is not hydraulic in itself but would become so when it is present together with a hydraulic active phase and is exposed to calcium-rich water solutions which triggers that property leading to setting and hardening of the material. Latent hydraulic compounds modify the hydration products formed and as a result modify the properties of cement pastes, mortars and concretes.

The best available technology (BAT) for the industrial production of cement uses a well-established two-step technology. In modern plants, the first step is carried out continuously in a rotary kiln, fed with limestone, different silica content materials and fuel (usually "pet coke", coal or natural gas) producing, at around 1450°C, a clinker composed of about 75% of alite (C₃S) (this amount could range from 55 to 78% for conventional OPC clinker), which is afterwards cooled down in a grate or satellite cooler before being stored. The alite (C₃S) is the silicate most responsible for the good hydraulic behaviour of the material. In the second step the clinker is ground, generally to a Blaine specific surface between 3000 and 3500 cm²/g and eventually mixed with other materials aiming at different corrections and other purposes.

The concept of the existing cement BAT is based on the production of an alitic (C₃S) clinker which requires around 1250 kg of limestone per ton of clinker and kiln temperatures around 1450°C, in spite of the use of some fluxes. After grinding, the alite crystals react with water, forming a silicate gel (poorly crystalline calcium silicate hydrate) - CSH - generally with a C/S molar ratio between 1.7 and 1.8 and, simultaneously, a significant amount of portlandite CH (Ca(OH)₂). The strength of the cement stone is determined by the structure and chemical composition of the CSH gel, which, at 28 days, represents 40 to 50% in weight. Portlandite generally represents 20 to 25% in weight and contributes to the pH value of the material, but neither contributes to the strength nor the chemical stability of the material. When preparing typical clinker using a C/S molar ratio of about 3.2 in the raw material, there is produced about 50% in weight of the CSH gel with a C/S molar ratio between 1.7 and 1.8.

Due to the use of limestone as the source of calcium and the high temperature required for the clinkerization process to obtain C₃S, the ecological footprint of this BAT for the industrial cement production is quite high, namely as regards CO₂ emissions (over 800 kg per ton of clinker), derived both from the decarbonation of the limestone (approximately 60% of the emissions) and the burning of the fuel (remaining 40% of the emissions). As a result, the cement industry is today responsible for more than 5% of all worldwide anthropogenic emissions of CO₂.

Due to the fact that OPC is a very versatile, easy to use, durable and relatively inexpensive building material its application is an important element for the social and economic development and well-being of today's society.

Designing and developing a hydraulic binder matching the technical, economic and workability qualities of OPC, and allowing a reduction of the ecologic footprint, namely CO₂ emissions, represents simultaneously a great challenge both to the technical research and development and to the fulfilment of the social responsibility obligations of the world cement industry.

Over the last decade the cement industry tried to respond to this challenge using alternative raw materials and fuels that could result in decreasing the CO₂ emissions. Some approaches target the partial or total substitution of calcium for other elements with impact on the reduction of CO₂ content in the raw materials. Others try to reduce the amount of calcium required developing belitic clinkers. Still others try to develop alternative non-clinker technological routes.

Representative examples of the state of art are two particular products which are described in patent literature as follows: i) a hydraulic binder being a cement based on a Belite-Calcium-Sulfoaluminate-Ferrite (BCSAF) clinker, which is a clinker with low or no content of alite, described in e.g., US 8,177,903 B2, US 8,317,915 B2, or US 2012/0085265 A1; and ii) a hydraulic binder being based on the same raw materials as used in "classical" cement production but using a lower molar Ca/Si ratio, described in e.g., DE 10 2007 035 257 B3, DE 10 2007 035 258 B3, DE 10 2007 035 259 B3, DE 10 2005 037 771 B4, or DE 10 2005 018 423 A1.

Masaki K. et al. (Cement and Concrete Research, 2002. 32(6): p. 931-934) discloses the changes in texture and morphology of alite and belite crystals present in commercial Portland cement clinkers after being re-heated at a temperature of 1550°C for 20 hours in air. By applying this severe heat treatment, some pre-existing round belite crystals were converted into dendritic shape belite crystals. This dendritic morphology of belite crystals was also found to be formed at the decomposed surface of some pre-existing alite crystals. Furthermore, the presence of this particular crystal morphology was related to the presence of SO₃ and MgO species that contribute to decrease the liquid viscosity and accelerate the above-mentioned process.

On a world scale, the investment of the cement industry in the existing BAT for OPC production is considerable, creating an important economic constraint to a drastic alteration of the existing technology.

Thus, the problem underlying the present invention was to provide hydraulic binders and a process for their production using the traditional clinker route and producing less CO₂ emissions than in conventional cement production.

It was found that this technical problem can be solved by hydraulic binders comprising belite (C₂S) with dendritic micro-morphology. The dendritic micro-morphology is embedded in a silicate matrix, which is preferably amorphous. These specific structures can be produced by a process, compared to the traditional clinker route, involving specific cooling steps.

The invention relates to a process for producing a hydraulic binder consisting in belite (C₂S) with dendritic micro-morphology, embedded in an endogenous latent amorphous hydraulic calcium silicate continuous matrix comprising the steps:
A. Heating the raw material containing at least calcium oxide and silica in an overall C/S molar ratio in the range of from 1.25 and 1.8 to a temperature T₁, of from 1300°C to 1600°C, wherein T₁ is within the range in which αC₂S and a liquid (L) silicate phase coexists in the CaO-SiO₂ phase diagram (αC₂S + L) ; and,
B. maintaining at that temperature T₁ for a time t1 in the range of from 5 min to 100 min;
C. First cooling to a temperature T₂, wherein T₂ is in the range of from below T₁ to the respective isothermal reaction temperature, and
D. maintaining at that temperature T₂, to obtain crystalline belite (C₂S) with dendritic micro-morphology; and
E. Second cooling to ambient temperature at a cooling rate of 300°C

Preferred embodiments of the invention are described in the description hereinafter (including examples), the claims and the figures.
Figure 1a) shows a temperature versus time diagram indicating the temperature course for a process according to the invention.
Figure 1b) shows a CaO-SiO₂ phase diagram indicating the amount of silica with the balance being calcium oxide.
Figures 2a), 2b) and 3a) show Scanning Electronic Microscopy (SEM) images of belite (C₂S) crystals obtained by the BAT process (Fig. 2a)) and obtained according to the invention (Figs. 2b) and 3a)).
Fig. 3b) shows a XRD (X-ray diffractogram) of the samples with dendritic belite crystals obtained according to the invention.
Fig. 3c) depicts the relative% consumption evolution over time of three different hydraulic active phases: alite, dendritic belite (the focus of this invention) and round belite. It is possible do observe a different reaction profile between the two morphologically different belite crystals, standing out the higher reactivity of dendritic crystals which reach a value of 4 times the observed for the round belite ones.
Fig. 4a) shows a Scanning Electronic Microscopy (SEM) picture of the samples with dendritic belite crystals obtained according to the invention after 28 days of hydration.
Fig. 4b) shows XRD corresponding to the sample of Fig. 4a).
Fig. 5 shows ²⁹Si MAS-NMR spectra of hydrated dendritic belite clinker.
Fig. 6 shows ²⁹Si MAS-NMR spectra of the hydrated paste of Example 2.

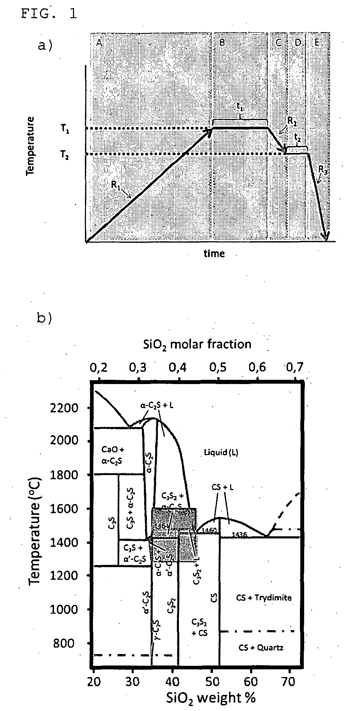

In the CaO-SiO₂ phase diagram, as to be seen from Fig. 1b), when starting from alite (C₃S), a decrease in calcium leads first to the formation of belite (C₂S), in one of its five allotropic forms *α, α'_{H,} α'_{L,} β* and *γ,* then to rankinite (C₃S₂) and finally to wollanstonite (CS), the latter with two allotropic forms α and β. It is well established in the art that belite shows a weak and slow hydraulic activity. The specific hydraulic binder i) based on BCSAF clinker, as described above, attempts to improve this by using additives or by respecting certain conditions. Both rankinite and wollanstonite are reported as being hydraulically inactive. This is the main reason why the BAT is based on alite.

The process of claim 1 results in a hydraulic binder containing at least 40% in weight of belite crystals with specific dendritic micro-morphology. Due to this micro-morphology the hydraulicity of belite is triggered in the early ages of the hydration process. The CaO-SiO₂ phase diagram in Fig. 1b) shows the region in which fine dendritic belite micro-morphology can be obtained, namely the region "αC₂S + liquid". However, belite in dendritic form may occur occasionally in other situations, for example during the production of typical clinker due to process fluctuations or overheating, being revealed as a dispersed constituent in the calcium aluminoferrite interstitial phase.

The process of this invention utilizes the region shown in the CaO-SiO₂ equilibrium diagram of Fig. 1b), using specific clinkerization and cooling operations, to produce a large extent of C₂S with fine dendritic micro-morphology embedded in an amorphous silicate matrix.

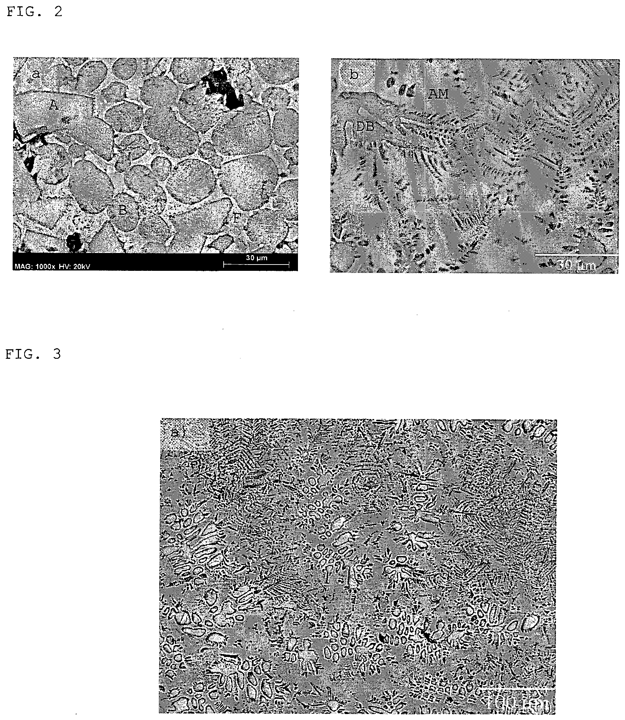

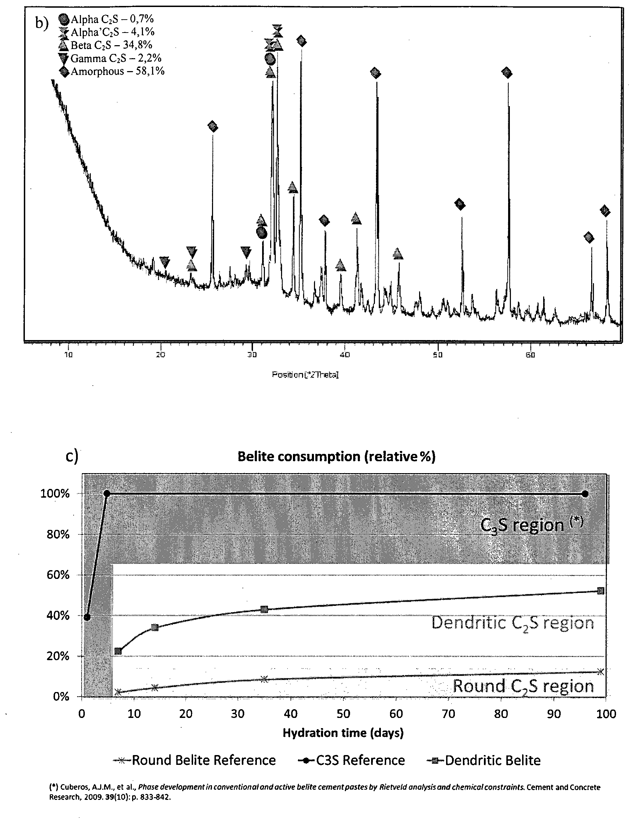

The term "dendritic" means a tree-like structure of crystals growing as the solid-liquid phase (e.g. within the kiln) cools down according to a special pattern under non-equilibrium conditions. This dendritic micro-morphology has very important consequences in what regards to clinker properties as it increases not only the specific surface but also the surface energy of these crystals (e.g., silicates) making them to react easier and faster with water and therefore to trigger the so-called "latent hydraulic" properties of the phase where they have grown in and where they are actually embedded in. Dendritic structures are shown in Figures 2b) and 3a) and a measurement of their improved reactivity, when compared to round belite structures, is depicted in fig. 3c), where it is shown the evolution of belite consumption over time. In this case the relative % consumption of dendritic belite exceeds by 4 times the consumption verified for round belite crystals.

In a preferred embodiment, the micro-morphology of the dendritic belite has a characteristic secondary arm spacing λ₂ lower than 40µm, in particular lower than 20µm. λ₂ is the average distance between the "branches of the tree". That parameter can be determined by e.g. SEM or optical microscopy.

The hydraulic binders comprise the combination of hydraulic active crystalline and latent hydraulic silicate phases.

The hydraulic binder comprises one latent hydraulic calcium silicate phase. Typically, the latent hydraulic calcium silicate phase is amorphous. In particular, the amorphous calcium silicate phase is formed of endogenous amorphous calcium silicate associated with the formation of the belite dendritic micro-morphology;

In preferred embodiments of the hydraulic binder of the invention, a part of the calcium or silicon of the hydraulic active crystalline silicate phase and/or the latent hydraulic silicate phase is substituted by a metal selected from Al, Fe, Mg, B, S, P, K, Na, or any combination thereof. The percentage of substitution is preferably from 1% to 20%, in particular from 5% to 15%.

In preferred embodiments, the amount of hydraulic active phase is in a range of from 40 to 90 % by weight, and the amount of latent hydraulic phase is in a range of from 60% to 10% % by weight, in each case based on 100% by weight of hydraulic binder.

The hydraulic binder is produced by the process of the invention. The processes comprise at least one heating step and two cooling steps. First, the raw materials are heated to a temperature T₁ which is within the temperature range in which αC₂S is in a liquid (L) silicate phase, i.e. the region αC₂S + L, exists in the CaO-SiO₂ phase diagram. From the phase diagram, e.g. Fig. 1b), the skilled person can determine suitable values for T₁. In Fig. 1b) the rectangle indicates the range of process temperatures (T₁ and T₂) being suitable for the production of dendritic structures. Suitable values for T₁ can be taken from e.g. Fig. 1b). Depending on the composition used, preferably, the temperature T₁ is within the range of from 1450°C to 1550°C, most preferably from 1500°C to 1550°C. The heating is carried out at a suitable rate R₁, which is similar to, or the same, as the heating rate used in the BAT. The rate R₁ depends on the quantity of material used and the heat source. A suitable and preferred value for R₁ is 25°C/min.

The raw materials used are raw materials common in the art, e.g. limestone, clays and other argillaceous materials, marls, sandstone, fly ash, natural and artificial pozzolanic materials, mineral industrial residues, slags, and diatomites. The raw materials contain at least limestone and silica (amorphous or in quartz form). In producing the dendritic belite, the overall C/S molar ratio is in the range of from 1.25 and 1.8, preferably, of from 1.3 to 1.7.

Depending on the amount of material used and the heating conditions, optionally the heated materials are maintained at the temperature T₁ ± ΔT for a time t₁ until homogenization of the heated material is obtained. Preferably, AT=50°C, and the time t₁ is in the range of from 10 min to 60 min.

Then, the heated materials are cooled to a temperature T₂ which is within the temperature range of from below T₁ to the above the first isothermal reaction temperature, i.e., 1464°C for the rankinite peritectic in the binary phase diagram of Fig. 1b). The cooling from T₁ to T₂ is carried out at a suitable rate R₂, which is preferably within the range of from 10 to 150 °C/min, more preferably 30 °C/min or in the range of from 20 to 100 °C/min. Preferably, the temperature difference between T₁ and T₂ is at least 50°C, preferably in the range of from 100°C to 300 °C.

Depending on the amount and quality of material used and the cooling conditions optionally the cooled materials are maintained at the temperature T₂ for a time t₂ until the desired dendritic micro-morphology is obtained. Preferably, the time t₂ is in the range of from 1 min to 60 min, in particular of from 1 min to 10 min.

Subsequently, the materials are cooled to ambient temperature. That cooling can be carried out by e.g. allowing the material to stand at room temperature, or cooling at a specific rate R₃, which is preferably equal to or above 200 °C/min, most preferably is 500 °C/min.

A most preferred process is described in Fig. 1a), which shows a production cycle that can be divided in 5 steps:
A. Heating at an adequate rate R₁, comparable to the heating rate used in the BAT, to T₁;
B. Maintaining constant at the temperature T₁, e.g. 50 to 250 Celsius degrees above the isothermal reaction temperature, within the αC₂S + Liquid region, e.g. 1550 °C for T₁, for a period t₁ allowing the homogenization of the material; time t₁ depends on the volume of the material, e.g. 10 to 60 minutes;
C. First cooling stage on which the system is brought to a temperature T₂ that allows the clinker to start the growth of the desired dendritic morphology, with T₂ being 5 to 50 Celsius degrees above the isothermal reaction temperatures, e.g. T₂ is between 1450°C and 1550°C in a binary CaO-SiO₂ system, applying a cooling rate R₂ being between 50 °C/min and 150°C/min;
D. Maintaining constant at the temperature T₂ for a period of time t₂, in which crystals are formed and grow into a dendritic morphology, wherein time t₂ depends on the volume of the material, and is e.g. 10 to 60 minutes;
E. Cooling the system to room temperature, e.g. naturally or with forced cooling, e.g. at a cooling rate R₃ between 200 °C/min and 1500°C/min.

Preferably, the processes of the invention further comprise grinding the material obtained after cooling to a Blaine specific surface above 3000 cm²/g, in particular above 3500 cm²/g. Such a grinding step is known in the art and can be carried out by conventional procedures.

For preparing a building material, the hydraulic binder is mixed with water. Preferably, the amount of water added is in an amount of equal to or below 50% of weight based on 100 % of weight of hydraulic binder, preferably, of from 10% to 40% by weight. Upon water addition, the hydraulic binder hydrates and hardens. In a preferred embodiment, the hydrated material comprises substantially no portlandite (calcium hydroxide), in particular less than 1% by weight.

The following examples illustrate the invention without restricting the scope of protection.

### Example 1

### Production of a belite-based reactive hydraulic binder

This example demonstrates that through an adequate combination of clinkerization temperature and cooling pattern using "α-C₂S + liquid" compositions, especially with a C/S molar ratio between 1.3 and 1.7, it is possible to obtain crystals of α, β and γ C₂S with a generalized fine dendritic micromorphology embedded in an amorphous silicate phase resulting from the solidification of the liquid present at the clinkerization temperature.

A belite-based reactive hydraulic binder composed of belite dendritic crystals embedded in an amorphous matrix was produced by using a mixture containing the raw materials as described in Table 1 below, having this mixture a C/S molar ratio of 1.4.

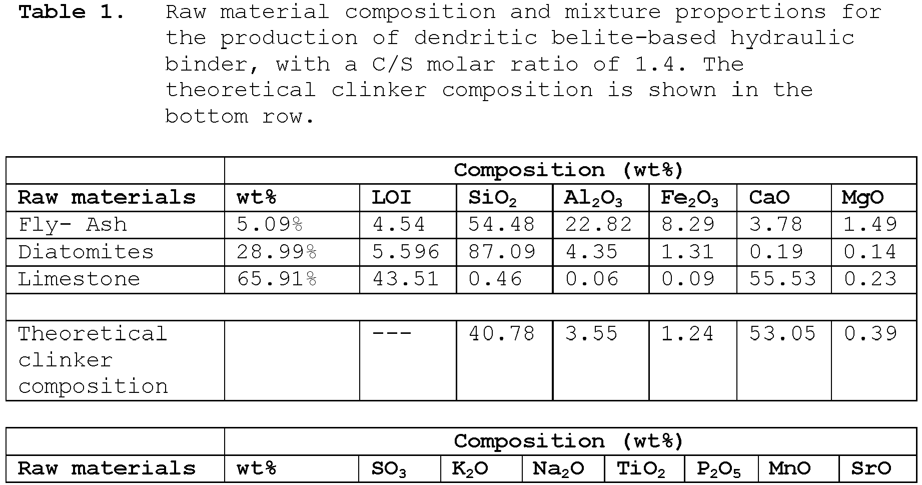

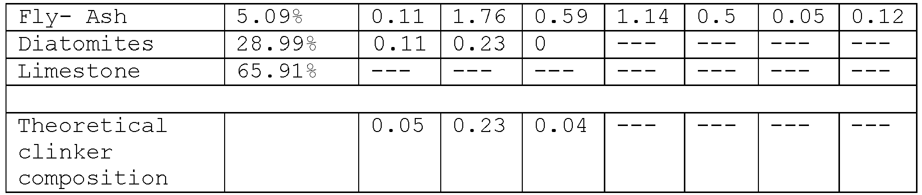

After mixing the raw materials, this mixture was pressed into a pellet of approximately 1 cm height and 10 cm diameter. The pellet was then cut in 4 equal portions, each one was placed in a Pt crucible and all 4 crucibles were introduced in the furnace using a Pt crucible holder.

The process, following the course shown in Fig. 1a), was then taken through the following steps:
A. Heating at a rate Ri= 25°C/min to a temperature T₁ of 1500°C;
B. The temperature T₁ (in the C₂S + Liquid region) was maintained constant for a period ti= 30 minutes allowing the homogenization of the material;
C. The system was first cooled to a temperature T₂ = 1400°C allowing the clinker to start the crystallization of belite, in this stage a cooling rate R₂ of approximately 40°C/min was applied;
D. This temperature was kept constant during a period t₂ = 1 minute in which dendritic crystals were formed;
E. The system was then brought to room temperature naturally in air, corresponding to a R₃ of about 300°C/min.

The microstructure obtained is shown in Figure 2b). For comparison, the typical structure of a clinker produced with the BAT is shown in Fig. 2a).
Figures 2a) and 2b) are Scanning Electronic Microscopy (SEM) images illustrating the different micro-morphologies of C₂S crystals obtained through the usual BAT process and the invention. Figure 2a) corresponds to an anhydrous clinker grain revealing a typical structure of an industrial clinker (A-Alite, B- Belite, F- Alumino-ferritic crystalline matrix); figure 2b) corresponds to the invention (DB- Dendritic Belite, AM - Amorphous Matrix).

Figure 3a) shows an optical microscopy image in which a fully dendritic belite structure embedded in an amorphous silicate matrix is observed, while figure 3b) shows its corresponding XRD (X-ray diffraction) diffractogram, indicating that more than 40% of C₂S was stabilized. XRD peaks are identified to the correlated phases. Blue diamonds indicate Al₂O₃ peaks that were used as internal standard for the determination of the amorphous phase wt%.

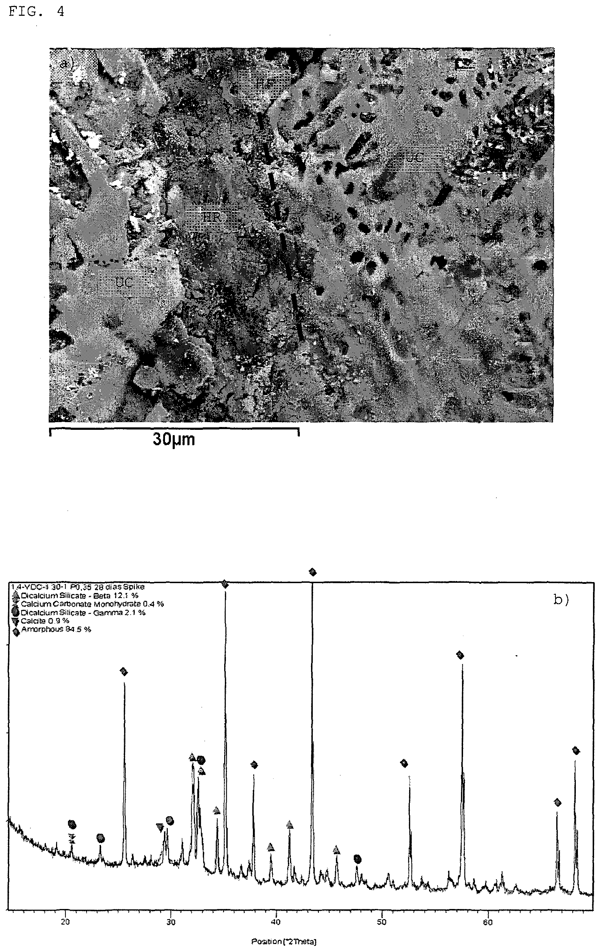

Due to its generalized fine dendritic micro-morphology, the reactivity of the belite crystals embedded in the amorphous silicate phase is significantly increased, even when the polymorphism of the C₂S is more than 80% of β-C₂S. SEM and XRD analysis, depicted in figures 4 a) and b), show that in the presence of water an extensive hydration reaction of both crystalline and amorphous phase occurs. When mixing with water, at 28 days, the degrees of reaction of the dendritic C₂S are more than one third.

Figure 4a) corresponds to the SEM image of the dendritic clinker under 28 days of hydration. A water/clinker ratio of 0.35 was used. It is possible to see the dendritic shape of belite crystals in the unreacted anhydrous phase (unhydrated clinker - UC) and a large region of hydrated clinker with formation of C-S-H gel (HR) with a well-defined hydration front (HF); b) XRD of the sample shown in a) on which it is possible to observe a large amount of amorphous phase (84.5%) resulting from the production of C-S-H during hydration and from unreacted amorphous phase.

One of the features of this dendritic clinker is the absence of portlandite after hydration as it is pointed out by Rietveld analysis. The stoichiometry of the CSH produced has typically a C/S molar ratio between 1.4 and 1.7 and an amount of constitutional water very dependent on the water/clinker ratio employed and the particle size distribution.

The water/clinker ratio employed (between 0.20 and 0.35) and the size distribution of the clinker particles (Blaine above 3000 cm²/g) and the λ₂ of the produced dendrites, have an important effect on the extension and kinetics of the hydration process.

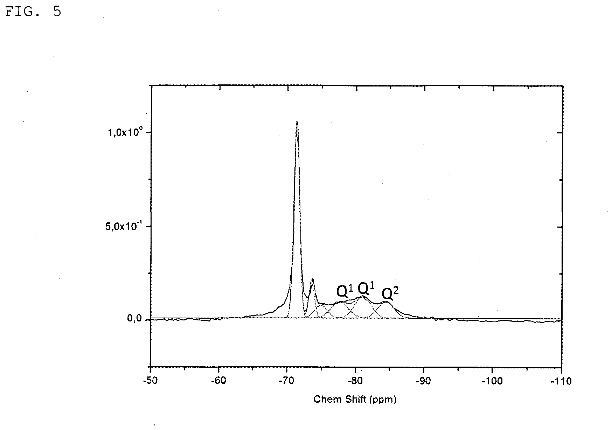

Figure 5 shows the ²⁹Si MAS-NMR spectra of the same hydrated dendritic clinker where it is possible to see the presence of the bands between -75 and -86 ppm corresponding to the groups Q¹ and Q² typical from the existence of C-S-H. Coordination degree Qⁿ indicates the type of structural unit on which Si element is present, as described in Table 2 below.

**Table 2. Explanation of the structural units Qⁿ**

| Structural Unit | Description |
|---|---|
| Q⁰ | Monomers of SiO₄⁴⁻ |
| Q¹ | Dimers and terminal groups |
| Q² | Intermediate chain groups |
| Q³ | Planar structures |
| Q⁴ | 3-dimensional structures |

During the hydraulic reaction of this dendritic dual phase binder the pH is 13.

In some circumstances a small amount of monohydrocalcite can be formed during the hydraulic reaction, as seen in figure 4b).

Due to the elimination of the formation of portlandite the reacted calcium efficiency is increased, which constitutes a fundamental result of the dual phase hydraulic binder of the invention. While in a normal OPC the efficiency of the total amount of reacted calcium (Ca) is smaller than 65%, in the new hydraulic binder it can reach 95%.

The compressive strength of this hydraulic binder, after 28 days is more than 15 MPa.

### Example 2

### Production of a hydraulic binder by mixing alitic clinker with the belitic silicate binder of Example 1

A reactive composite binder was produced by mixing the dual phase silicate binder described in Example 1 with 10%, 20% and 30% of alitic clinker.

After grinding, this composite clinker was hydrated with a water/clinker ratio of 0.25. The addition of the alitic clinker results in a significant increase of the reactivity in the first hours.

The pH of the reaction of this mixture with water is 13.

As a result of the addition of 10% of alitic clinker, not more than 1.5% of portlandite was formed.

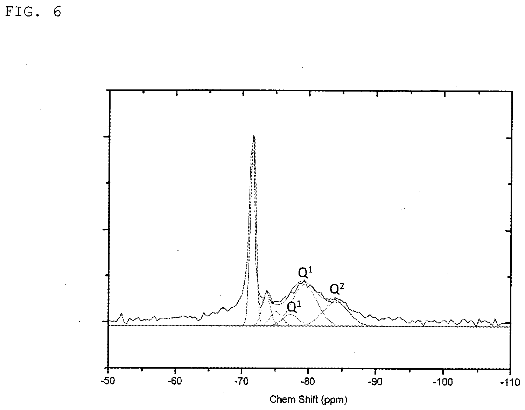

Figure 6 depicts the ²⁹Si MAS-NMR results of this hydrated paste that show the presence of CSH with a Q₁ and Q₂ connectedness (see Example 1 above).

After 28 days, the compressive strength for a 0.25 w/c (water/clinker) ratio paste after the addition of 10% of alitic clinker is higher than 30 MPa, with 20% is higher than 35 MPa and with 30% is higher than 45 MPa.

Figure 6 shows the ²⁹Si MAS-NMR of the paste obtained by the hydration of a mixture of 90% dendritic belite clinker + 10% alitic clinker. These results indicate a well-developed hydration as it is evidenced with the presence of Q¹ and Q² connectedness peaks related to CSH gel.

The Examples illustrate the production of the new low-calcium silicate hydraulic binder of this invention as well as a possible combination of this hydraulic binder with other materials. Both the amount of calcium and clinkerization temperature requirements for the production of these binders result in an important reduction of CO₂ emissions compared with the existing BAT.

The concept of the hydraulic binder comprises one or more of the following features:
a) C₂S with fine dendritic micro-morphology embedded in an amorphous endogenous silicate phase with an overall C/S molar ratio between 1.25 and 1.8, preferably between 1.3 and 1.7;
b) a mixture containing at least 10% in weight of a) forming a hydraulic binder ;
c) Methods of producing a) using the clinkerization process.

## Claims

1. A process for producing a hydraulic binder consisting in belite crystals with fine dendritic micro-morphology embedded in an endogenous amorphous latent hydraulic calcium silicate continuous matrix, comprising the steps:
A. Heating raw material containing at least calcium and silicon atoms in an overall C/S molar ratio in the range of from 1.25 and 1.8 to a temperature T₁ of from 1300 °C to 1600 °C, wherein T₁ is within the range in which αC₂S in a liquid (L) silicate phase (αC₂S + L) exists in the CaO-SiO₂ phase diagram;
B. Maintaining at that temperature T₁ for a time t₁ in the range of from 5 min to 100 min;
C. First cooling to a temperature T₂, wherein T₂ is in the range of from below T₁ to the respective isothermal reaction temperature;
D. Maintaining at that temperature T₂, to obtain crystalline belite (C₂S) with dendritic micro-morphology; and
E. Second cooling to ambient temperature.

2. The process of claim 1, further comprising grinding the material obtained after cooling to a Blaine specific surface above 3000 cm²/g, in particular above 3500 cm²/g.

3. The process of claim 1, comprising the steps:
A. Heating raw mixture of 5.09% in weight of fly-ash, 28.99% in weight of diatomites and 65.91% in weight of limestone containing at least calcium and silicon atoms in an overall C/S molar ratio of 1.4 to a temperature T₁ of 1500 °C, at a heating rate of 25 °C/min;
B. Maintaining at that temperature T₁ for a time t₁ of 30 minutes;
C. First cooling to a temperature T₂ of 1400 °C, at a cooling rate of 40 °C/min;
D. Maintaining at that temperature T₂ during a period t₂ of 1 minute, in which dendritic crystals were formed; and
E. Second cooling to ambient temperature, at a cooling rate of about 300 °C/min.

## Patentansprüche

1. Verfahren zum Herstellen eines hydraulischen Bindemittels, das aus Belitkristallen mit feindendritischer Mikromorphologie besteht, eingebettet in eine endogene amorphe latente hydraulische kontinuierliche Kalziumsilikatmatrix, umfassend die folgenden Schritte:
A. Erhitzen des Rohmaterials, das mindestens Kalzium- und Siliziumatome in einem gesamtem C/S-Molverhältnis im Bereich von 1,25 und 1,8 bis zu einer Temperatur T₁ von 1300 °C bis 1600 °C enthält, wobei T₁ innerhalb des Bereichs liegt, in dem αC₂S in einer flüssigen (L) Silikatphase (αC₂S + L) im CaO-SiO₂-Phasendiagramm existiert;
B. Halten bei dieser Temperatur T₁ für eine Zeit t₁ im Bereich von 5 Min bis 100 Min;
C. Erstes Abkühlen auf eine Temperatur T₂, wobei T₂ im Bereich von unterhalb T₁ der jeweiligen isothermen Reaktionstemperatur liegt;
D. Halten bei dieser Temperatur T₂, um kristallinen Belit (C₂S) mit dendritischer Mikromorphologie zu erhalten; und
E. Zweites Abkühlen auf Umgebungstemperatur.

2. Verfahren nach Anspruch 1, ferner umfassend das Mahlen des Materials, das nach dem Abkühlen auf eine Blainesche spezifische Oberfläche über 3000 cm²/g, insbesondere über 3500 cm²/g erhalten wurde.

3. Verfahren nach Anspruch 1, umfassend die folgenden Schritte:
A. Erhitzen des Rohmaterial-Gemisches von 5,09%-Gewicht Flugasche, 28,99%-Gewicht Diatomiten und 65,91%-Gewicht Kalkstein, das mindestens Kalzium- und Siliziumatome in einem gesamtem C/S-Molverhältnis im Bereich von 1,4 bis zu einer Temperatur T₁ von 1500 °C enthält, bei einer Erhitzungsgeschwindigkeit von 25 °C/min;
B. Halten bei dieser Temperatur T₁ für eine Zeit t₁ im Bereich von 30 Minuten;
C. Erstes Abkühlen auf eine Temperatur T₂ von 1400 °C, bei einer Abkühlungsgeschwindigkeit von 40 °C/min;
D. Halten bei dieser Temperatur T₂ während einer Zeitspanne t₂ von 1 Minute, in der dendritische Kristallen geformt wurden; und
E. Zweites Abkühlen auf Umgebungstemperatur, bei einer Abkühlungsgeschwindigkeit von ungefähr 300 °C/min.

## Revendications

1. Procédé de production d'un liant hydraulique constitué de cristaux de bélite à micromorphologie dendritique fine, incorporée dans une matrice continue de silicate de calcium hydraulique latent amorphe endogène, comprenant les étapes suivantes:
A. Chauffage d'une matière première contenant au moins des atomes de calcium et de silicium, dans un rapport C/S molaire global dans la gamme de 1,25 et 1,8, à une température T₁ de 1300 °C jusqu'à 1600 °C, où T₁ est dans la gamme dans laquelle αC₂S dans une phase liquide (L) il existe du silicate (αC₂S + L) dans le diagramme de phases CaO-SiO₂;
B. Maintenir à cette température T₁ pendant un temps t₁ dans la gamme de 5 min à 100 min;
C. Premier refroidissement à une température T₂, où T₂ est dans la gamme inférieure à T₁ à la température de réaction isotherme respective;
D. Maintenir à cette température T₂, pour obtenir de la bélite cristalline (C₂S) avec une micromorphologie dendritique; et
E. Second refroidissement à la température ambiante.

2. Procédé selon la revendication 1, comprenant en outre le broyage de la matière obtenue après le refroidissement sur une surface Blaine spécifique au-dessus de 3000 cm²/g, en particulier au-dessus de 3500 cm²/g.

3. Procédé selon la revendication 1, comprenant les étapes suivantes:
A. Chauffage d'un mélange de matière première contenant 5.09% en poids de cendres volantes, 28.99% en poids de diatomites et 65.91% en poids de calcaire contenant au moins des atomes de calcium et de silicium dans un rapport C/S molaire global, dans la gamme de 1,4 à une température T₁ de 1500 °C, à un taux de chauffage de 25 °C/min;
B. Maintenir à cette température T₁ pendant un temps t₁ de 30 minutes;
C. Premier refroidissement à une température T₂ de 1400 °C, à un taux de refroidissement de 40 °C/min;
D. Maintenir à cette température T₂ pendant une période t₂ de 1 minute, dans lequel des cristaux dendritiques ont été formés; et
E. Second refroidissement à la température ambiante, à un taux de refroidissement d'environ 300 °C/min.
